## Europäisches Patentamt

## European Patent Office

## Office européen des brevets

(11) Publication number: **0 259 928**

**A1**

## (12) EUROPEAN PATENT APPLICATION

(21) Application number: **87201693.6**

(22) Date of filing: **07.09.87**

(51) Int. Cl.4: **B01D 21/00** , C02F 3/10 , B01D 17/028

(30) Priority: **10.09.86 NL 8602285**

(43) Date of publication of application:
**16.03.88 Bulletin 88/11**

(84) Designated Contracting States:
**AT BE CH DE FR GB IT LI LU NL SE**

(71) Applicant: **N.V. GECHEM S.A.**
**12, Avenue de Broqueville**
**B-1150 Brussels(BE)**

(72) Inventor: **Verstraete, Willy Henri**
**Dasstraat 4**
**B-9030 Wondelgem(BE)**
Inventor: **Creyf, Hubert Sylvain Georgette**
**Leykendreef 5**
**B-8201 St.Michiels-Brugge(BE)**
Inventor: **Creten, Wilfried Felix**
**Bosdreef 4**
**B-9130 Lochristi(BE)**
Inventor: **Van Rompu, Katrien Jeanne**
**Henriette**
**Koning Boudewijnstraat 32**
**B-9220 Merelbeke(BE)**

(74) Representative: **van der Beek, George Frans**
**et al**
**Nederlandsch Octrooibureau Johan de**
**Wittlaan 15 P.O. Box 29720**
**NL-2502 LS 's-Gravenhage(NL)**

(54) Equipment for the anaerobic fermentation of sewage water and also a method for a combined anaerobic/aerobic fermentation of sewage water.

(57) A method and equipment for a combined anaerobic/aerobic fermentation of sewage water wherein sand and primary sedimentation material are removed in one step by passing the sewage water through a reactor which can be tilted so that its centre line is inclined at 10 to 80° and which has a length : diameter ratio of at least 1:1, which reactor is provided with at least one feedpipe and one discharge pipe and which contains a system of at least 2 foam material layers consisting of open-cell polyurethane foam material situated against each other, each having a flat main surface and a main surface profiled virtually in the direction of the main axis of the reactor in multi-channel form, the profiled surface of a foam material layer being situated in each case in successive layers against the flat surface of the adjacent foam material layer to collect the sludge sliding to the bottom of the reactor and to drain the collected sludge from time to time.

Fig-1

1a.

## Equipment for the anaerobic fermentation of sewage water and also a method for a combined anaerobic/aerobic fermentation of sewage water

The invention relates to an equipment for the anaerobic fermentation of sewage water and also to a method in which sand and primary sedimentation material are removed from the water and at the same time an anaerobic fermentation of some of the organic constituents present takes place, then aerobic purification takes place with aeration, the secondary sedimentation sludge subsequently being given the opportunity to settle and said sludge is refermented after separation.

In general, sewage water has the properties and composition specified in Table 1.

### TABLE 1

| | | | |
|---|---|---|---|
| pH | 6.7 | 7.5 | |
| dissolved substances | 500 | 1000 | mg/l |
| - inorganic (ignition residue) | 45 | 55 | % |
| undissolved substances | 150 | 400 | mg/l |
| - inorganic (ignition residue) | 30 | 40 | % |
| sediment (after settling for 1 hour) | 5 | 10 | ml/l |
| biochemical oxygen demand | 200 | 500 | mg/l |
| nitrogen: | | | |
| 1. organic N (Kjeldahl) | 30 | 50 | mg/l |
| 2. $NH_4^+ + - N$ | 40 | 65 | mg/l |
| 3. $NO_2 - N$ | 0 | 2 | mg/l |
| 4. $NO_3 - N$ | | | |
| phosphorus (as P) | 15 | 30 | mg/l |
| detergents (an.act.) | 10 | 20 | mg/l |
| chlorides | 200 | 400 | mg/l |

The contaminating substances include the organic (biochemically degradable) substances which consist chiefly of carbon and hydrogen bonded to other elements. These are the oxygen-removing waste substances which can interfere with the biological self-purification of the surface water by micro-organisms and which in an environment which is low in oxygen or without oxygen may proceed to decay. The conventional purification of waste water is usually aimed primarily at a far-reaching elimination of sedimentable and biochemically degradable substances.

Of the sedimentable substances sand is the first to be removed. The removal of the sand present is primarily of importance because sand may cause damage to pieces of mechanical equipment or may give rise to difficulties in the subsequent purification.

The sewage water is then fed through primary sedimentation tanks in order to remove as much sedimentable substances from the waste water as possible.

The units of primary sedimentation equipment in which the waste water remains for at least one hour may be divided into:

1. primary sedimentation tanks in which the sludge is fed to a particular compartment of the tank as a result of gravity, viz. to the sludge pit or sludge compartment;

2. primary sedimentation tanks in which the sludge is fed to the sludge pit or sludge compartment by means of rotating or pushing devices; such tanks may have a rectangular groundplan or a circular groundplan.

Sludge collectors are also used which suck the sludge away.

The sewage water from which the sand and sedimentable substances have largely been removed is then purified aerobically in an active sludge equipment which contains aeration compartments. The said aeration compartments contain active sludge flakes which consist of a slimy base material in which, inter alia, bacteria and protozoa live. Said active or living sludge is brought into contact with the sewage water from which sand and sedimentable substances have largely been removed, the mixture of sludge and water being vigorously aerated and mixed. The organic substances which are contained in the waste water are absorbed by the organisms and converted into the living mass of the flakes. Depending on the loading of the process, the organic substances are mineralized to a greater or lesser degree. The treatment time usually varies between 12 and 24 hours. In units of secondary sedimentation equipment, which correspond to units of primary sedimentation equipment for the treatment of waste water, the active sludge and the water have to be separated from each other again after the biological purification. The sedi-mentation time is usually 1.5 to 2.0 hours. Some of the sedimented active sludge is fed back to the active sludge equipment (return sludge). As a result of the fact that the quantity of active sludge increases, a quantity of active sludge has periodically to be removed from the active sludge equipment (surplus or drainage sludge, also termed secondary sludge) which has to be subjected to a further treatment.

Aerobically stabilized sludge can be treated in a variety of ways. After conditioning (improvement of the filterability), which can be carried out, inter alia, chemically by adding coagulating agents or thermally, the sludge can be de-watered by means of centrifuges, vacuum filters, belt-type presses or pressure filters and then, if desired, dried thermally or burnt.

Table 2 gives an insight into the degree of elimination of various impurities, which may occur in waste water, by a conventional aerobic treatment.

## TABLE 2

| Impurity | Elimination |
|---|---|
| bacteria and viruses | xx |
| suspended substances | x |
| total organic substances | xx ... xxx |
| toxic organic substances |  |
| (pesticides) | xx |
| inorganic salts |  |
| toxic inorganic substances |  |
| (heavy metals) | x |
| phosphate | x |
| nitrate | xxx *) |
| ammonia | xxx *) |
| cyanide | xxx |
| urea | xxx |
| phenols | xx |
| substances giving rise to smell and taste | none |
| oil | x |
| detergents | x |
| hydrocarbons | x |
| chlorinated hydrocarbons | x |
| volatile organic acids | xxx |
| carbohydrates) |  |
| amino acids ) | xxx |
| fatty acids ) |  |
| proteins ) |  |

Key:

xxx  90 - 100% elimination     -     10% elimination

xx   50 - 90% elimination     *) with nitrification and

x    10 - 50% elimination        denitrification

The reduction in COD achieved appears to be 90 to 95%.

A drawback of the conventional sewage water purification is the fact that the hydraulic residence time of the waste water in the active sludge installations demands so much time (12 to 24 hours).

It seems useful to mention that USP 4,151,075 discloses a process and a plate setting equipment for the removal of solids from sludges simultaneously with the oxidation of organics having COD and BOD and dissolved or suspended in the carrying liquid, usually sewage or some aqueous stream associated with its treatment. In said aerobic process it is important that the residence time for oxidation of organics by strictly chemical, enzymatic and/or bacterial actions, is sufficient.

4

Likewise EPA 0133545 discloses an equipment and process for the aerobic fermentation of sewage water wherein closed-cell and open-cell foam materials are classed with reticulated soft-or hard foam materials for the use as carrier materials. Said foam materials are polyurethanes, polyethylene, polypropylene, polyvinylchloride, silicone and urea-formaldehyde resins, that with respect to composition and shape have been defined vaguely.

It has been found that this treatment time can be substantially shortened and that the oxygen demand can be reduced (up to 50%) as a result of carrying out the sand sedimentation and the primary sedimentation in one step by passing the sewage water through a reactor which can be tilted so that its centre line is inclined at 10 to 80° and which has a length : diameter ratio of at least 1:1, which reactor is provided with at least one feedpipe and one discharge pipe and which contains a system of at least 2 foam material layers consisting of open-cell polyurethane foam material situated against each other, each having a flat main surface and a main surface profiled virtually in the direction of the main axis of the reactor in multi-channel form, the profiled surface of a foam material layer being situated in each case in successive layers against the flat surface of the adjacent foam material layer to collect the sludge sliding towards the bottom of the reactor and to drain the collected sludge from time to time.

If such a reactor is used, at least as much sand and suspended material is removed as when a primary sedimentation tank is used.

As the result of a correct choice of the hydraulic residence time, preferably 1 to 1.2 h, the carrying out of the sand sedimentation and the primary sedimentation in one step results at the same time in an anaerobic fermentation of some of the organic constituents present.

Preferably, soft polyurethane foam materials with a high load capacity of the polyether type are used as foam materials with at most one pore per mm, in particular with at most one pore per 3 mm.

If the foam material charge in the reactor is constructed of pieces with a shorter length than the length of the reactor, then the small channels in the consecutive pieces should join each other in a manner such that small channels are produced which extend over the whole length of the reactor.

Preferably the angle of inclination of the centre line of the reactor is 45°.

When waste water is fed into the reactor, the sand and the primary sedimentation material begin to separate according to the general principle of the functioning of the parallel plate separator (PPS) and slide back towards the bottom of the reactor, where they can be collected and separated.

Preferably, anaerobic micro-organisms are added to the reactor during the start-up. But even if they were not to be added, an anaerobic fermentation of organic materials present would soon start to take place in the pores of the open-cell polyurethane foam material under the influence of the anaerobic micro-organisms always present in sewage water.

It is found that, with a hydraulic residence time of 1 to 1.2 h, a reduction in COD of up to 50% takes place, as a result of which the subsequent aerobic repurification is reduced to half. From the economic point of view this means a reduction of 50% in the air to be supplied for the aeration.

As a result of the separation of the sand and the primary sedimentation being carried out in one step and the COD of the sewage water being subsequently reduced by up to 50% through anaerobic fermentation, the secondary sedimentation and the sludge processing after the aerobic repurification obviously remain required to an undiminished extent. Nevertheless, the production of drainage slib has dropped by approximately 50%, and consequently so have the processing costs in this connection.

The section of the reactor to be used does not have to be round but may have any other shape such as an oval, rectangular or square section.

The length of the reactor may also be arbitrary, but satisfactory results have been achieved with a reactor having a diameter of 30 cm and a length of 2 to 3 m.

For the sake of completeness attention is drawn to the fact that the diameter of the reactor is not restricted to a single dimension either.

Preferably, the flat sides of the profiled foam material layers used in the reactor are provided with a water-repellent film which is applied to the foam material layer, for example, by flame lamination or with a sprayed adhesive.

If the sand removal, the removal of the primary sedimentable material and/or the reduction in COD should not be satisfactory after one pass through the reactor, the treated sewage water can be fed once again to the reactor without any difficulty.

For the sake of completeness the general principle of the parallel plate separator, which underlies the invention as the basic idea, is explained below.

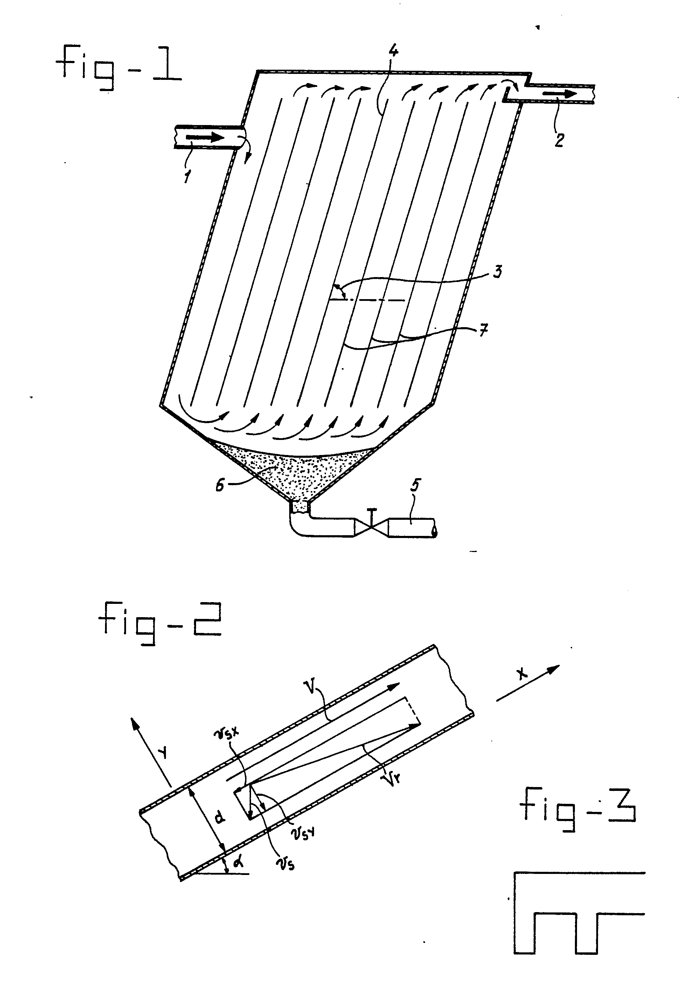

By placing a series of parallel slantingly situated metal plates at an equal distance of a few cm from each other (see Figure 1)
wherein

1 represents the liquid feedpipe,
2 represents the liquid discharge pipe,
3 represents the angle of inclination,
4 represents the centre line of the reactor,
5 represents metal plates
6 represents the tap of the discharge pipe for the separated material, and
7 represents the separated material, the liquid flowing upwards, a shallow settling tank is formed having a large settling surface per volume of decanter. After the heaviest material has settled on the plates, depending on the adhesion of that material and the slope a, the heaviest material will slide downwards at a particular velocity. The material collected in the decanter should be drained at a certain frequency.

Referring to Figure 2 in which

$x = x$ axis,
$y = y$ axis,
$I$ = volume of plate bank (m³),
$A$ = m² of plate bank to be installed,
$A'$ = total horizontal surface formed by all the plates taken together (m²),
$Q$ = overflow rate (m³/h) = $A'.v_o$,
$v_o$ = overflow velocity (m³/m².h),
$v_s$ = sedimentation rate of the particles - to be broken down into:

$v_{sx}$ = sedimentation rate in x direction,
$v_{sy}$ = sedimentation rate in y direction

$v_{sx} = V - v_s . \sin \alpha$,
$v_{sy} = -v_s \cos \alpha$ = critical component for the sedimentation,
$V$ = upward flow rate in the y direction:

-it normally holds true that $v_o$ = overflow rate = 1 m³/m².h;
-with a plate angle $\alpha$ and a plate spacing d it holds true that:

$$I = d.A = d.\frac{A'}{\cos \alpha} = \frac{d}{\cos \alpha} . \frac{Q}{v_o}, \quad I = \frac{0.1 \, Q}{0.5} = 0.2 \, Q \text{ and } HRT = 0.?$$

(HRT = hydraulic residence time)

where $\alpha$ = 60 and $v_o$ = 1 and d = 0.1 m.

## OBJECT

From a comparative test of PU reactor/aerated sand trap/primary settling tank it appears that:
-the PU reactor removes at least as much sand as the primary settling tank,
-the lowest $COD_t$ values are measured in the anaerobically fermented sewage water,
-as a result of the micro-organisms immobilised in the polyurethane mould, COD in solution is significantly removed.

## PU REACTOR

The pilot reactor (Figure 1) has the following features:
-height 2.7 m and tiltably installed,
-inside diameter 31 cm,
-polyurethane mould made of TR 30, profiled in channels of 1.2 × 1.2 cm and with grooves of 0.6 cm, with a polyurethane film on the smooth side,
-total useful reactor volume 160 l, 40% of which

is filled with polyurethane or a maximum of 65 l of polyurethane,

-the upward flow rate of the water was calculated on the basis of the assumption that the polyurethane becomes virtually completely filled with biomass and that the water does not therefore execute a mass transport through the polyurethane (V reactor = 100 l).

The hydraulic residence time was set at 1 hour and the temperature at 20°C.

PARAMETERS MEASUREDSS = suspended solids, quantity of suspended material,

$COD_t$ = Chemical Oxygen Demand; chemical oxygen demand of the total mixed sample of liquid,

$COD_{sol}$ = Chemical Oxygen Demand of the liquid fraction which does not sediment,

$BOD_5$ = Biochemical Oxygen Demand, sand fraction.

Table 1: Percentage $COD_t$ reductions in the effluents from the PU reactor (E), the aerated sand trap (B) and the primary settling tank (P) with respect to the incoming sewage water.

| E (%) | B (%) | P (%) | |
|---|---|---|---|
| 86 | 75 | 94 | |
| 81 | 54 | 85 | |
| 93 | 80 | 93 | |
| 83 | 77 | 90 | |
| 79 | 71 | 84 | |
| 67 | 67 | 68 | |
| Totals | 489 | 424 | 514 | 1427 |
| Averages | 82 | 71 | 86 | 80 |

Table 2: Percentage SS reductions in the effluents from the
PU reactor (E), the aerated sand trap (B) and the
primary settling tank (P) with respect to the
incoming sewage water.

| E (%) | B (%) | P (%) | |
|-------|-------|-------|------|
| 90 | 88 | 99 | |
| 100 | 100 | 100 | |
| 93 | 100 | 99 | |
| 98 | 94 | 100 | |
| 35 | 31 | 69 | |
| 73 | 87 | 96 | |
| 28 | 66 | 86 | |
| Totals 517 | 566 | 640 | 1723 |
| Averages 74 | 81 | 93 | 83 |

Table 3: Percentage $COD_{sol}$ reductions in the effluents from
the PU reactor (E), the aerated sand trap (B) and
the primary settling tank (P) with respect to the
incoming sewage water.

| E (%) | B (%) | P (%) | |
|-------|-------|-------|------|
| 27 | 7 | 20 | |
| 50 | 14 | 21 | |
| 22 | 10 | 14 | |
| 37 | 27 | 31 | |
| 67 | 11 | 20 | |
| Totals 203 | 69 | 106 | 378 |
| Averages 41 | 14 | 21 | 25 |

8

Table 4: Percentage sand reduction in the effluents from
the PU reactor (E), the aerated sand trap (B) and
the primary settling tank (P) with respect to the
incoming sewage water.

| | E (%) | B (%) | P (%) | |
|---|---|---|---|---|
| | 85 | 83 | 70 | |
| | 83 | 96 | 79 | |
| Totals | 168 | 179 | 149 | 496 |
| Averages | 84 | 90 | 75 | 83 |

Table 5: Literature data relating to the reductions which
are obtained using a conventional primary settl-
ing tank.

| Parameter | 1 | 2 | 3 |
|---|---|---|---|
| SS | 60 | 50-70 | 40-70 |
| $BOD_5$ | 33 | 25-40 | 25-40 |
| $COD_t$ | 30 | / | / |

1 = VERSTRAETE, W. (1984). Biotechnological processes
environmental technology (course notes). Gent,
Fakulteit Landbouwwetenschappen (Faculty of Agricul-
tural Science).

2 = METCALF and EDDY, Inc, (1979). Wastewater engineering:
treatment, disposal, reuse. New Dehli, Tata McGraw-
Hill Publishing Company LTD, 920 p.

3 = VAN VAERENBERGH, E. (1982). Afvalwaterzuiverings-
installaties: berekening en dimensionering (Waste
water purification systems: design and dimensioning).
Antwerp, Stichting Leefmilieu, 367 p.

**Claims**

1. Equipment for removing sand and primary sedimentable material from anaerobically fermentable sewage water, characterized in that the equipment consists of a reactor which can be tilted so that its centre line is inclined at 10 to 80° and which has a length : diameter ratio of at least 1:1, which reactor is provided with at least one feedpipe and one discharge pipe at the top and/or at the wall side and which contains a system of at least 2 foam material layers consisting of open-cell polyurethane foam material situated against each other, each having a flat main surface and a main surface profiled virtually in the direction of the the main axis of the reactor in multi-channel form, the profiled surface of a foam material layer being situated in each case in successive layers against the flat surface of the adjacent foam material layer, a sludge drainage tap being located at the bottom.

2. Equipment according to Claim 1, characterized in that the reactor is essentially cylindrical.

3. Equipment according to Claim 1 or 2, characterized in that the reactor is installed with an angle of inclination of its centre line of 45°.

4. Equipment according to Claims 1-3, characterized in that the length : diameter ratio of the reactor is at least 10 : 1.

5. Equipment according to Claims 1-4, characterized in that the feed-and discharge pipes are located diametrically with respect to each other, but not at the same height, in the side wall.

6. Equipment according to Claims 1-5, characterized in that the open-cell polyurethane foam material has a polyether base, is of a soft type but has a high load capacity.

7. Equipment according to Claims 1-6, characterized in that at most one pore is present per mm in the foam material..

8. Equipment according to Claims 1-7, characterized in that the number of pores in the foam material is at most 1 per 3 mm.

9. Equipment according to Claims 1-8, characterized in that the flat sides of the foam material layers are coated with film which is not permeable to water.

10. Method for the removal of sand and primary sedimentation material from sewage water, after which aerobic fermentation is carried out with aeration, the secondary sedimentation sludge then being given the opportunity to sediment and said sludge being re-fermented after separation, characterized in that the removal of sand and primary sedimentation material is carried out in one step by passing the sewage water through a reactor which can be tilted so that its centre line is inclined at 10 to 80° and which has a length : diameter ratio of at least 1:1, which reactor is provided with at least one feedpipe and one discharge pipe and which contains a system of at least 2 foam material layers consisting of open-cell polyurethane foam material situated against each other, each having a flat main surface and a main surface profiled virtually in the direction of the main axis of the reactor in multi-channel form, the profiled surface of a foam material layer being situated in each case in successive layers against the flat surface of the adjacent foam material layer to collect the sludge sliding to the bottom of the reactor and to drain the collected sludge from time to time.

11. Method according to Claim 10, characterized in that a cylindrical reactor is used.

12. Method according to Claim 10 or 11, characterized in that the sewage water is passed through a reactor with an inclination of the centre line of 45°.

13. Method according to Claims 10-12, characterized in that a reactor is used with a length : diameter ratio of more than 10 : 1.—

14. Method according to Claims 10-13, characterized in that the open-cell polyurethane foam material consists of a polyurethane with a polyether base.

15. Method according to Claims 10-14, characterized in that at most one pore is present per mm in the foam material.

16. Method according to Claims 10-15, characterized in that one pore is present per 3 mm in the foam material.

17. Method according to Claims 10-16, characterized in that foam material layers are used which are coated on the flat side with a film which is not permeable to water.

18. Method according to Claims 10-17, characterized in that the hydraulic residence time of the sewage water in the reactor is chosen so that a reduction in COD can take place through anaerobic fermentation in the open cells of the foam material.

19. Method according to Claims 10-18, characterized in that the hydraulic residence time of the sewage water in the reactor is chosen so that a reduction in COD of up to 50% takes place through anaerobic fermentation in the open cells of the foam material.

0 259 928

fig-1

fig-2

fig-3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 151 075   (D.F. OTHMER)<br><br>* Column 13, lines 57-68; column 14, lines 1-20; column 16, lines 58-68; column 17-18 * | 1,2,3, 5,10, 11,12 | B 01 D   21/00<br>C 02 F    3/10<br>B 01 D   17/028 |
| A | | 4,13, 14 | |
| | --- | | |
| Y | EP-A-0 133 545   (LINDE)<br><br>* Page 3, lines  20-35;  page  4, lines 1-13; page 6, lines 23-30 * | 1,2,3, 5,10, 11,12 | |
| A | | 6,14 | TECHNICAL FIELDS SEARCHED (Int. Cl.4) |
| | --- | | |
| A | GB-A-1 264 782   (S.F.W. CRONDALL)<br>* Page 2, lines 45-97 * | 1 | B 01 D<br>C 02 F |
| | ----- | | |

The present search report has been drawn up for all claims

| Place of search | Date of completion of the search | Examiner |
|---|---|---|
| THE HAGUE | 15-10-1987 | DE PAEPE P.F.J. |